# EUROPÄISCHE PATENTANMELDUNG

(11) **EP 3 333 570 A1**
(43) Veröffentlichungstag der Anmeldung: **13.06.2018**
(21) Anmeldenummer: 16203103.3
(22) Anmeldetag: 09.12.2016
(51) Int. Cl.: G01N 27/36, G01N 27/333, G01N 27/30, G01N 27/414, G01N 27/416

(54) **ELEKTROCHEMISCHER SENSOR UND VERFAHREN ZUR HERSTELLUNG DAVON**

(71) Anmelder: Mettler-Toledo GmbH, 8606 Greifensee (CH)
(72) Erfinder: Rutz, Andreas, 8052 Zürich (CH); Petersen, Limon, Juan, 8034 Zürich (CH)
(74) Vertreter: Mettler-Toledo

(57) **Zusammenfassung**

Elektrochemischer Sensor und Herstellverfahren, einschliesslich des Einbaus eines Sensorelements in einen Sensorschaft, des elektrochemischen Sensors. Ein elektrochemischer Sensor (1, 101) weist ein planes Messelement (2, 102) umfassendes Sensorelement (15, 115) mit einer im Gebrauch einem Messmedium (5) zugewandten Messfläche (8, 108) auf. Ferner ist der elektrochemische Sensor (1, 101) mit einem Sensorschaft (4, 104) versehen, welcher an seinem im Gebrauch dem Messmedium (5) zugewandten Ende ein Fenster (13, 113) mit einer Einfassung (11, 111) aufweist und in welchen Sensorschaft (4, 104) das Sensorelement (15, 115) im Bereich des Fensters (13, 113) eingebaut ist. Der elektrochemische Sensor (1, 101) besitzt ein ringförmiges Dichtungselement (9, 109), welches zwischen dem Sensorelement (15, 115) und der Einfassung (11, 111) angeordnet ist. Ein Isolatorelement (10, 110) ist fest und untrennbar mit dem Messelement (2, 102) des Sensorelements (15, 115) unter Freistellung oder Aussparung der Messfläche (8, 108) verbunden. Dabei ist das Dichtungselement 9, 109), den elektrochemischen Sensor (1, 101) gegen das Eindringen von Messmedium (5) schützend, zwischen dem Isolatorelement (10, 110) und der Einfassung (11, 111) dichtend angeordnet. Die Stabilität und Reproduzierbarkeit des Sensors werden durch den Aufbau genau definierte Messfläche verbessert. Der Aufbau des Sensors ermöglicht eine grosstechnische Herstellung mittels Wafertechnologie.

## Beschreibung

Die Erfindung betrifft einen elektrochemischen Sensor sowie ein Verfahren zu dessen Herstellung. Insbesondere betrifft die Erfindung den Aufbau eines Sensors in jenem Bereich, der im Falle des Gebrauchs des elektrochemischen Sensors mit dem Messmedium in Kontakt steht.

Konventionelle elektrochemische oder auch potentiometrische Sensoren, insbesondere solche zum Vermessen des pH-Werts eines Messmediums sind als so genannte Glaselektroden ausgebildet. Sie weisen üblicherweise einen Glasschaft auf, an dessen im Gebrauch dem Messmedium zugewandten bzw. in das Messmedium eingetauchtes Ende als Messelement eine etwa kugel- oder halbkugelförmige Glasmembran aus elektrochemisch aktivem pH-Glas fest mit dem Glasschaft verbunden, d.h. verschmolzen, ist. Der auf diese Weise gebildete Messstab ist mit einer Pufferlösung gefüllt. Abhängig vom pH-Wert des Messmediums bildet sich über der Glasmembran eine Potentialdifferenz aus, welche mittels einer in die Pufferlösung eingetauchten Metallelektrode als Ableitelement gemessen wird gegenüber dem Gleichgewichtspotential einer Referenzelektrode als Bezugspunkt.

Ferner sind sogenannte Ionensensitive Feldeffekt Transistor- (ISFET) Sensoren bekannt, bei welchen der pH-Wert eines Messmediums oder die Konzentration eines bestimmten Ions, für welches der Sensor eine sensitive Schicht aufweist, durch eine Änderung des Source-Drain-Stromes des Transistors gemessen wird.

Im Gegensatz zum konventionellen potentiometrischen Sensor weist der ISFET-Sensor ein im Gebrauch dem Messmedium zugewandten weitestgehend ebenes oder planes Messelement als sensitiven Bereich auf.

In der US 6,464,940 B1 wird der Aufbau, die Herstellung und das Messprinzip einer pH-Messzelle beschrieben, welche für die Bestimmung kleinster Volumina an Messmedium, d.h. in der Grösse eines Tropfens, ausgeformt ist. Auf einer auf ein Halbleitersubstrat aufgebrachte Isolatorschicht wird als Reservoir für das Messmedium eine ringförmige Wand aus Pyrexglas angeordnet und mit einer Metallelektrode beschichtet, so dass letztere mit dem Messmedium in Kontakt gelangen kann. Die dem Reservoir gegenüberliegende Seite des Substrats wird ebenfalls mit einer Metallelektrode beschichtet. Somit kann eine Kapazitäts-Spannungscharakteristik bei einer Frequenz um 1 MHz zwischen der sich im Gebrauchsfall mit dem Messmedium in Kontakt befindenden Elektrode und einer auf der Rückseite des Halbleitersubstrats angebrachten Elektrode gemessen werden, welche abhängig vom pH-Wert des Messmediums variiert.

Während einerseits die Herstellung von konventionellen elektrochemischen Glassensoren aufwändig ist und die Glasmesszellen einzeln produziert werden müssen, weisen diese eine hohe Sensitivität und Langzeitstabilität auf, wohingegen die Produktion von ISFET-Sensoren oder jene, wie die US 6,464,940 B1 beschreibt, mit einem ebenen oder planen Messelement grosstechnisch in Wafertechnologie hergestellt werden können. Betreffend ihrer Stabilität und Widerstandsfähigkeit gegenüber aggressiven Medien erreichen die ISFET-Sensoren jedoch nicht jene Werte, die elektrochemischen Glassensoren zu eigen sind. ISFET-Sensoren weisen im Vergleich zu elektrochemischen Glassensoren eine ungünstigere Driftstabilität auf und sind weniger gut für die Prozessmesstechnik geeignet.

Wünschbar sind daher elektrochemische Sensoren, deren Messelement, beispielsweise die pH-sensitive Glasmembran bei elektrochemischen Glassensoren, als planes Messelement ausgebildet ist; wobei die ein solches Messelement aufweisenden Sensorelemente grosstechnisch in Wafertechnologie produzierbar sind.

Es hat sich gezeigt, dass wenn bei einem elektrochemischen Sensor mit einem planen Messelement, welches in Verbindung mit einem Sensorelement in einen Sensorschaft eingebaut ist, ein im Gebrauch das Eindringen von Medium - in der Regel ein Messmedium oder ein Reinigungsmedium - vermeidendes Dichtungselement direkt auf der Messfläche des Messelements aufliegt, Messfehler in Form einer verminderten Steilheit beziehungsweise einer langen Ansprechzeit auftreten können, d.h. die Stabilität und die Reproduzierbarkeit des elektrochemischen Sensors leiden könnte.

Aufgabe der Erfindung ist es einen elektrochemischen Sensor vorzuschlagen, der eine in ihrer Grösse bzw. flächigen Ausdehnung abgegrenzte, also eine genau definierte Messfläche aufweist. Die bedeutet, dass im Gebrauch, wenn der Sensor in ein Messmedium oder Reinigungsmedium eingetaucht ist, das Messelement der Sensors eine genau definierte mediumsberührte Fläche, aufweist bei gleichzeitig guter Abdichtung des Sensors gegenüber dem Mess- oder Reinigungsmedium.

Diese Aufgabe wird gelöst durch einen elektrochemischen Sensor gemäss Anspruch 1 und ein Herstellverfahren, einschliesslich des Einbaus eines Sensorelements in einen Sensorschaft, des elektrochemischen Sensors gemäss Anspruch 11. Vorteilhafte Ausgestaltungen sind in den abhängigen Ansprüchen ausgeführt.

Ein elektrochemischer Sensor weist ein planes Messelement umfassendes Sensorelement mit einer im Gebrauch einem Messmedium zugewandten Messfläche auf. Ferner ist der elektrochemische Sensor mit einem Sensorschaft versehen, welcher an seinem im Gebrauch dem Messmedium zugewandten Ende ein Fenster mit einer Einfassung aufweist und in welchen Sensorschaft das Sensorelement im Bereich des Fensters eingebaut ist. Der elektrochemische Sensor besitzt ein ringförmiges Dichtungselement, welches zwischen dem Sensorelement und der Einfassung angeordnet ist. Ein Isolatorelement ist fest und untrennbar mit dem Messelement des Sensorelements unter Freistellung oder Aussparung der Messfläche verbunden. Dabei ist das Dichtungselement, den Sensor gegen das Eindringen von Messmedium schützend, zwischen dem Isolatorelement und der Einfassung dichtend angeordnet.

Unter einem planen Messelement soll im vorliegenden Zusammenhang ein mit einem einseitig eine Messfläche bildenden ebenen sensitiven Bereich - beispielsweise in Form einer sensitiven Schicht als sensitives Material - versehenes Substrat oder ein scheibenförmiges beidseitig weitgehend ebenes Messelement aus sensitivem Material verstanden werden.

Ein Isolatorelement bestehend aus isolierendem Material bildet beim erfindungsgemässen elektrochemischen Sensor mit dem Messelement eine monolithische Struktur, d.h. ist mit diesem untrennbar verbunden.

Das Messelement sowie das Isaolatorelement sind in sich nicht zwingend homogen. Sie können auch mehrlagig aufgebaut sein; beispielsweise kann das Messelement eine oder mehrere sensitive Schichten umfassen.

Messelement und Isolatorelement formen, gegebenenfalls unter Einbeziehung weiterer für die Funktion eines elektrochemischen Sensors notwendiger Elemente - die jedoch nicht Gegenstand der Erfindung sind - das Sensorelement.

Ein Dichtungselement dient der Abdichtung des Sensorschaft-Inneren des elektrochemischen Sensors gegenüber einem Mess- oder auch Reinigungsmedium, in welches der Sensor im Falle seines Gebrauchs an einem Ende eingetaucht wird. Das Dichtungselement weist ein chemisch und thermisch beständiges Polymer- oder Elastomermaterial auf.

Mit Freistellung oder Aussparung einer Messfläche des Messelements, ist der Bereich zu verstehen, der der Messumgebung des Sensors zugewandt ist und im Gebrauch mit dem Messmedium in Kontakt steht.

Der Aufbau eines erfindungsgemässen elektrochemischen Sensors ermöglicht eine grosstechnische Herstellung des Sensorelements sowie den Aufbau einer für den Einbau in einen Sensorschaft geeigneten Form in Wafertechnologie. Insbesondere gewährleistet das im Bereich seines Kontakts mit dem Messmedium untrennbar mit dem Messelement verbundene Isolatorelement eine in ihrer Ausdehnung genau definierte im Gebrauch mit dem Messmedium in Kontakt stehende Messfläche, d.h. mediumsberührte Fläche. Ferner bewirkt das Isolatorelement zusammen mit dem ringförmigen Dichtungselement eine gute Abdichtung, indem verhindert wird, dass Messmedium zwischen Dichtungselement und Messfläche eindringen könnte. Dies macht sich letztendlich in einer verbesserten Sensorsteilheit und erhöhten Langzeitstabilität bemerkbar.

In einer bevorzugten Ausgestaltung weist das Sensorelement des erfindungsgemässen elektrochemischen Sensors eine flache, ebene Scheibe aus elektrochemisch aktivem pH-Glas als Messelement auf. Das Messelement kann jedoch auch als eine ebene Schicht oder Schichtstruktur umfassend elektrochemisch aktives pH-Glas ausgestaltet sein.

In einer vorteilhaften Weiterbildung des elektrochemischen Sensors weist das Isolatorelement ein thermisch und chemisch beständiges Isolatorglas auf, dessen thermischer Ausdehnungskoeffizient jenem des Messelements angepasst ist, insbesondere identisch mit dem thermischen Ausdehnungskoeffizienten des Messelements ist. Unter einem identischen Ausdehnungskoeffizienten soll hier ein solcher verstanden werden, welcher eine Abweichung zwischen Isolatorglas und pH-Glas von weniger als 5e⁻⁷ /K aufweist.

Alternativ kann das Isolatorelement eine mittels physikalischer oder chemischer Abscheideverfahren aufgebrachte Isolatorschicht, insbesondere aus Siliziumnitrid aufweisen. In diesem Falle muss auf Grund der geringen Schichtdicke einer solchen Isolatorschicht der thermische Ausdehnungskoeffizient des Isolatorelements nicht dem des Messelements entsprechen.

In einer besonders vorteilhaften Ausführungsform ist der Sensorschaft (4, 104) zylindrisch ist und das Fenster und damit die Freistellung bzw. die Aussparung an der Stirnfläche des Sensorschafts angeordnet. Dadurch wird ein einfach handhabbarer elektrochemischer Sensor gebildet.

In einer alternativen Ausführungsform ist der Sensorschaft (4, 104) zylindrisch ist und das Fenster in einem abgeflachten Bereich des Zylindermantels des Sensorschafts angeordnet.

Je nach Anordnung des Fensters und damit der Freistellung bzw. Aussparung an der Stirnfläche oder in einem abgeflachten Bereich des Zylindermantels des Sensorschafts kann die Messfläche des Messelements verschiedene Formen annehmen. Sie kann kreisförmig oder ellipsenförmig oder rechteckig ausgeformt sein. Für Letztere kann auch das Erfordernis einer gegenüber einer kreisförmigen Messfläche, wie sie in der Regel im Falle eines in die Stirnfläche des Sensorschafts eingebauten Sensorelements vorhanden ist, vergrösserten Messfläche die ellipsenförmige oder rechteckige Form der Messfläche begünstigen. Es ist jedoch immer erforderlich dass die freigestellte Fläche etwas kleiner ist als die Dichtfläche, ist um einen direkten Kontakt der Dichtung mit der aktiven Messfläche zu verhindern.

Aufgrund der Ausführungsform eines erfindungsgemässen elektrochemischen Sensors, bei welcher der Sensorschaft aus thermisch und chemisch resistentem metallischem Material oder Kunststoff gefertigt ist, wird ein robuster, weitgehend unzerbrechlicher elektrochemischer Sensor ermöglicht, welcher auch in rauer chemischer Umgebung eingesetzt werden kann und autoklavierbar ist.

Das Verfahren zur Herstellung eines erfindungsgemässen elektrochemischen Sensors mit einem einer im Gebrauch einem Messmedium zugewandten ebenen sensitiven Messfläche weist die folgenden Schritte auf:
- Herstellen einer untrennbaren Verbindung eines Wafers, der ein sensitives Material umfasst mit einem Isolatormaterial zu einem mindestens zweilagigen Wafer
- Erzeugen einer vordefinierten Dicke durch Bearbeiten des sensitiven Materials und gegebenenfalls des damit verbundenen Isolatormaterials
- Strukturieren des Isolatormaterials unter Freistellung einer Messfläche im sensitiven Material zur Bildung eines oder mehrerer Messelemente
- Schneiden des mindestens zweilagigen Wafers aus verbundenem sensitivem Material und strukturiertem Isolatormaterial zu mit Isolatorelementen versehenen Sensorelementen in den Bereichen vorhandenen Isolatormaterials
- Einbau eines derart erzeugten Sensorelements in einen Schaft, wobei ein Dichtungselement zwischen dem Isolatorelement und einer Einfassung am im Gebrauch dem Messmedium zugewandten Ende des Sensorschafts dichtend eingebracht wird.

Dieses Verfahren erlaubt die grosstechnische Herstellung der Sensorelemente und liefert einen kostengünstigen elektrochemischen Sensor.

In einer vorteilhaften Ausführung des Verfahrens weist das sensitive Material ein elektrochemisch aktives pH-Glas auf und das Isolatormaterial ein thermisch und chemisch beständiges Isolatorglas mit einem zum sensitiven Material angepasstem, insbesondere identischem, thermischen Ausdehnungskoeffizienten auf, welches Isolatormaterial vermittels "Direct Bonding" oder "Fusion Bonding" untrennbar zu einem mindestens zweilagigen Wafer mit dem sensitiven Material verbunden wird.

In einer alternativen Ausführung des Verfahrens umfasst das Isolatormaterial eine Isolatorschicht, insbesondere aus Siliziumnitrid, welche mittels physikalischer oder chemischer Abscheideverfahren auf das sensitive Material aufgebracht mit diesem zu einem mindestens zweilagigen Wafer verbunden wird und anschliessend strukturiert wird. In einer weiteren Alternative kann die mittels physikalischer oder chemischer Abscheideverfahren aufgebrachte Isolatorschicht vermittels einer Maske direkt während des Abscheidens in Form von Isolatorelementen strukturiert erzeugt werden.

Die Strukturierung des Isolatormaterials auf dem sensitiven Material kann mit Vorteil vermittels Ätztechnik, insbesondere nasschemisch mit Flusssäure oder vermittels Plasmaätzen erfolgen.

Die Erfindung wird im Folgenden anhand der stark schematisierten Zeichnungen erläutert. Dabei zeigen:
- Fig. 1: einen elektrochemischen Sensor in Form eines pH-Messstabs mit einer Referenzelektrode in seiner Gesamtansicht;
- Fig. 2: eine Teilansicht eines elektrochemischen Sensors in Form eines pH-Messstabs, mit einem in den Sensorschaft eingebauten Sensorelement in einer ersten Ausführungsform;
- Fig. 3A: eine Teilansicht einer weiteren Ausführungsform eines elektrochemischen Sensors in Form eines pH-Messstabs, mit einem in den Sensorschaft eingebauten Sensorelement, und
- Fig. 3B: Ein mit einem Isolatorelement verbundenes Messelement eines Sensorelements gemäss Fig. 3A
- Fig. 4: die Schritte zur Herstellung und zum Einbau eines Sensorelements in einen Sensorschaft.

Im Folgenden soll die Erfindung beispielhaft anhand eines pH-Sensors mit einem eine plane Messfläche aufweisenden Sensorelement, beispielsweise aus elektrochemisch aktivem pH-Glas, beschrieben werden. Die Erfindung umfasst jedoch auch weitere elektrochemische Sensoren, mit einem planen, als Substrat dienenden Sensorelement, beispielsweise einem Halbleiterelement, wie ihn die US 6,464,940 B1 offenbart, oder einem ISFET-Element.

Es sei an dieser Stelle darauf hingewiesen, dass die einzelnen Bauelemente der verschiedenen Ausführungsformen elektrochemischer Sensoren in den folgenden Figuren nicht massstabsgetreu gezeichnet sind.

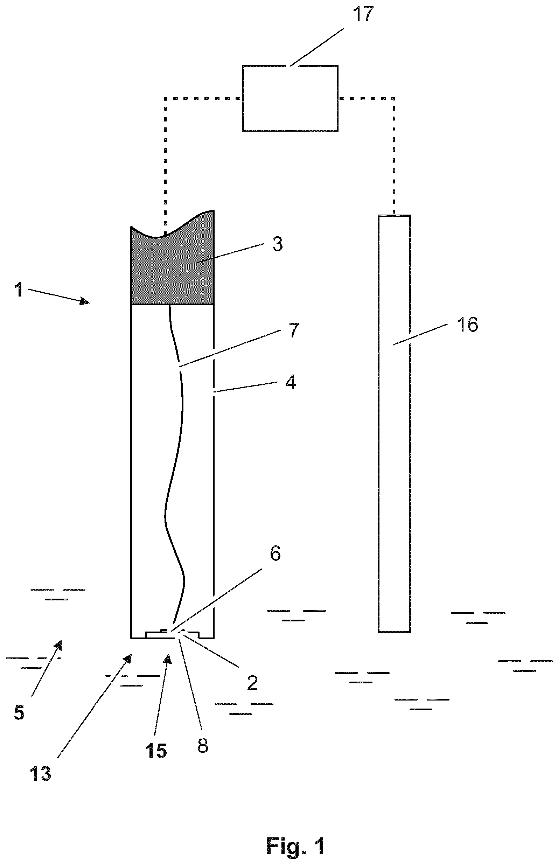

Die Figur 1 zeigt einen elektrochemischen Sensor 1 in einer stark schematisierten Darstellung. Der gezeigte elektrochemische Sensor 1 bildet einen Messstab, welcher zur Bestimmung des pH-Wertes eines Messmediums in Verbindung mit einer Referenzelektrode 16 verwendet wird. Über eine Leitung (in der Figur gestrichelt gezeichnet) sind der Sensor 1 und die Referenzelektrode 16 an einen Transmitter 17 angeschlossen.

Der elektrochemische Sensor 1 weist an seinem in der Figur nach unten weisenden Ende ein Fenster 13 auf, in welchem ein Sensorelement 15 angeordnet ist. Das Sensorelement 15 umfasst ein Messelement 2 und weist unter anderem eine plane Schicht, das heisst eine ebene Fläche oder Membran aus elektrochemisch aktivem pH-Glas auf. Alternativ kann das Messelement 2 auch eine beidseitig plane Scheibe aus pH-Glas umfassen. Das Sensorelement 15 ist in einen Sensorschaft 4 eingebaut. Im Gebrauch des elektrochemischen Sensors 1 ist dieser teilweise, d.h. mindestens in dem das Fenster 13 mit dem Sensorelement 15 umfassenden Bereich in ein Messmedium 5 eingetaucht, wobei eine Messfläche 8 des Messelements 2, eine mediumsberührte Fläche bildend, dem Messmedium 5 zugewandt ist. Der elektrochemische Sensor 1 weist an seinem dem Sensorelement 16 entgegen gesetzten Ende einen Sensorkopf 3 auf, welcher einen Teil der Sensorelektronik enthält. Letztere ist zur Übertragung eines Messsignals mit einem Kontakt 6 über eine Leitung 7 verbunden. Im Inneren des Sensorschafts 4 können am Sensorelement 16 weitere Baugruppen angeordnet sein, die der Erfassung des Messsignals dienen. Diese sind jedoch nicht Gegenstand der vorliegenden Erfindung und werden daher im Folgenden nicht weiter betrachtet.

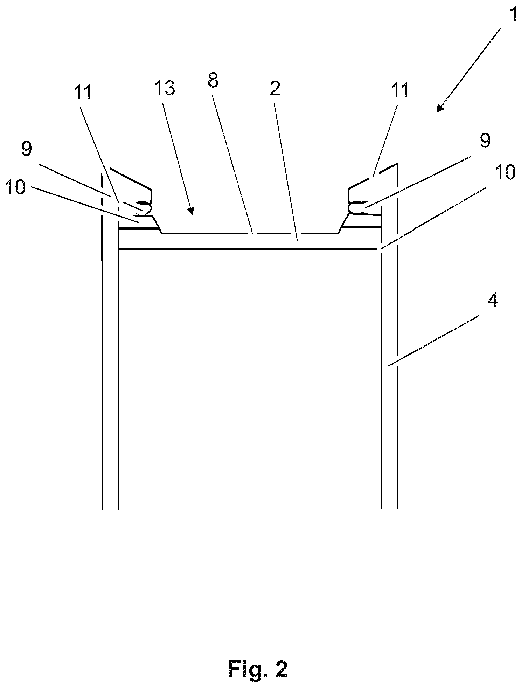

In der Figur 2 ist in einer Schnittdarstellung eine Teilansicht des im Gebrauch dem Messmedium 5 zugewandten Ende des elektrochemischen Sensors 1 gezeigt. Das in den Sensorschaft 4 eingebaute Sensorelement 16 kann entweder ein Messelement 2 aus elektrochemisch aktivem pH-Glas aufweisen oder ein Sensorelement, wie in der US 6,464,940 B1 beschrieben, sein, oder könnte auch ein ISFET-Sensor sein und dergleichen mehr. Entscheidend ist, dass die mediumsberührende Oberfläche des Messelements 2 plan ist. Vorteilhafterweise ist das Messelement 2 als flache Scheibe ausgebildet. Gegenüber dem Messmedium 5 ist der elektrochemische Sensor 1 vermittels eines elastischen Dichtungselements 9 abgedichtet. Das Dichtungselement 9 kann bevorzugt als Dichtungsring mit rundem oder flachem Profil aus einem chemisch und thermisch beständigen Polymer, wie PTFE (Polytetrafluorethylen), oder einem Elastomer, insbesondere einem Perfluoroelastomer (FFKM), gebildet sein. Abweichend von einer Kreisform kann ein solcher Dichtungsring auch weitere Formen annehmen, beispielsweise elliptisch sein.

Zwischen dem Dichtungselement 9 und der im Gebrauch mit dem Messmedium 5 in Kontakt stehenden Messfläche 8 des elektrochemischen Sensors 1 ist ein mit dem Messelement 2 monolithisch verbundenes Isolatorelement 10 angeordnet. Dieses Isolatorelement 10 besitzt eine Struktur mit einer in ihrer geometrischen Ausdehnung genau definierten, im Gebrauch mediumsberührten Freistellung der Messfläche 8 des Messelements 2. In der in Figur 2 gezeigten Anordnung ist das Isolatorelement 10 bevorzugt ringförmig ausgebildet, und bildet somit eine kreisförmige Freistellung der Messfläche 8 des Messelements 2. Das Isolatorelement 10 ist durch das sogenannte Waferbonding-Verfahren, auch Direct Bonding oder Fusion Bonding genannt, monolithisch, das heisst untrennbar mit dem Messelement 2 verbunden. Dieses Bondingverfahren ist aus dem MEMS-Packaging bzw Mikrofluidikbereich hinreichend bekannt und wird hier nicht weiter ausgeführt.

Das Isolatorelement 10 ist im Falle eines pH-Sensors mit einem planen Messelement 2 aus elektrochemisch aktivem pH-Glas aus einem artgleichen Material, namentlich aus einem isolierenden Glas, mit an den thermischen Ausdehnungskoeffizienten des pH-Glases angepasstem, insbesondere gleichem, thermoelektrischen Ausdehnungskoeffizienten. Durch die untrennbare Verbindung zwischen Material des Messelements, also dem sensitiven Material und Material des Isolatorelements, also Isolatormaterial ist der Sensor aus mindestens 2-lagigem Wafermaterial gefertigt.

Der Sensorschaft 4 ist bevorzugt aus Metall, beispielsweise Edelstahl, Titan, oder aus einem chemisch und thermisch beständigen harten Polymermaterial, zum Beispiel PEEK, PVDF oder PFA (Perfluoroalkoxy) oder einem vergleichbaren Fluorpolymeren oder auch aus einem Verbundmaterial gefertigt. Er weist an seinem im Gebrauch in das Messmedium eingetauchten Ende eine sich in Richtung zum Schaftinneren erstreckende Einfassung 11 auf. Die Abmessungen des Sensorschafts 4 können beispielsweise 12 mm für den Durchmesser, 1 mm für die Wandstärke betragen und die Einfassung 11 kann sich über circa 1 mm zum Schaftinneren erstrecken. Selbstredend sind auch elektrochemische Sensoren mit davon abweichenden Abmessungen herstellbar.

Das Dichtungselement 9 ist zwischen der Einfassung 11 und dem Isolatorelement 10 dichtend angeordnet, das heisst der Polymer- oder Elastomerring ist durch Druck zwischen der Einfassung 11 und dem Isolatorelement 10 leicht verformt, um so die Dichtheit der elektrochemischen Messsonde 1 an ihrem im Gebrauch in das Messmedium oder Reinigungsmedium eingetauchten Ende zu gewährleisten.

Durch die vollständige Auflage des Dichtungselements 9 auf dem Isolatorelement 10 anstatt einer direkten Auflage auf dem Messelement 2, wird verhindert, dass auch bei vollständiger Dichtungswirkung, Messmedium zwischen der Messfläche 8 und dem elastischen Dichtungselement 9 vorhanden sein könnte, was zu einer undefinierten Messfläche 8 führen würde. Die erfindungsgemässe Lösung liefert also eine in ihrer Ausdehnung genau definierte Messfläche 8, welche nicht durch Randeffekte / Austauscheffekte im Dichtungsbereich gestört wird.

Alternativ zu einem Isolatorelement 10, welches aus einem isolierenden, nicht sensitivem Glas mit einem dem Messelement 2 aus elektrochemisch aktivem pH-Glas angepasstem thermischen Ausdehnungskoeffizienten gefertigt ist, kann auch eine mittels physikalischer oder chemischer Abscheideverfahren erzeugte Schicht, beispielsweise aus Siliziumnitrid, das Isolatorelement 10 bilden. Aufgrund der üblichen Siliziumnitrid-Schichtdicke von etwa 0,1 bis 0,5 Mikrometern, ist hier keine Anpassung der thermischen Ausdehnungskoeffizienten von elektrochemisch aktivem pH-Glas des Messelements 2 und Isolatorelement 10 notwendig. Als weitere Materialien für solcherart aufgebrachte Isolatorelemente 10 kommen auch andere Isolatormaterialien, wie Siliziumoxid, Aluminiumoxid und der gleichen mehr in Frage. Denkbar sind auch Beschichtungen mit chemisch und thermisch beständigen Polymermaterialien.

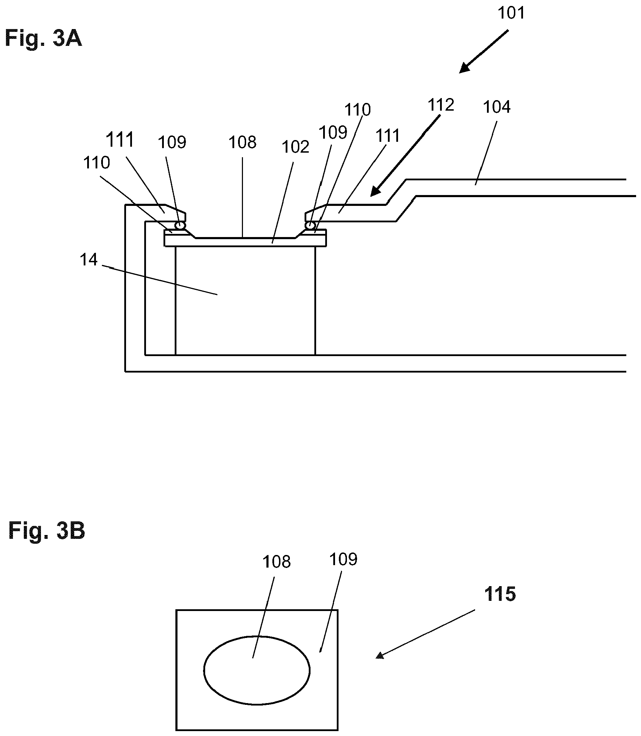

Die Figuren 3A und 3B zeigen Teilansichten einer weiteren Ausführungsform eines elektrochemischen Sensors 101, mit einem in den Sensorschaft 104 eingebauten Sensorelement 115, Figur 3A in einer Schnittzeichnung längs des Sensorschafts 104; Figur 3B das mit dem Isolatorelement 110 verbundene Messelement 102 in der Aufsicht.

In dieser Ausführungsform weist der Sensorschaft 104 an seinem im Gebrauch dem Messmedium 5 zugewandten Ende einseitig einen abgeflachten Bereich 112 mit einem Fenster 113 auf, in welchem das Sensorelement 115 angeordnet ist. Dieses in die Seitenwand des Sensorschafts 104 vermittels einer Haltevorrichtung 14 eingebaute Sensorelement 115 kann ein Messelement 102 mit einer von einer kreisförmigen Form abweichenden Form haben, beispielsweise oval oder rechteckig mit abgerundeten Ecken oder dergleichen mehr. Diese Ausführungsform ermöglicht gegenüber der Konstruktion gemäss Figur 2, bei der das Sensorelement 2 quer zur Zylinderachse der Sensorschafts 4 eingebaut ist, das Vorhandensein einer grösseren Messfläche 108.

Auch in der in den Figuren 3A und 3B gezeigten Ausführungsform ist zwischen dem Dichtungselement 109 und der mit dem Messmedium 5 in Kontakt stehenden Messfläche 108 ein mit dem Messelement 102 monolithisch verbundenes Isolatorelement 110 angeordnet. Das entsprechende Isolatorelement 110 kann in dieser Ausführungsform als ovaler Ring ausgebildet sein oder aber auch, wie in Figur 3B gezeigt sich, abgesehen von der hier ovalförmigen Freistellung der Messfläche 108, den gesamten Randbereich des Messelements 102 bedecken. Wichtig ist dass das Dichtungselement 109 vollständig auf dem Isolatorelement 110 aufliegt und dass die durch die Freistellung sich ergebende Messfläche 108 in ihrer Grösse bzw. Ausdehnung genau definiert ist.

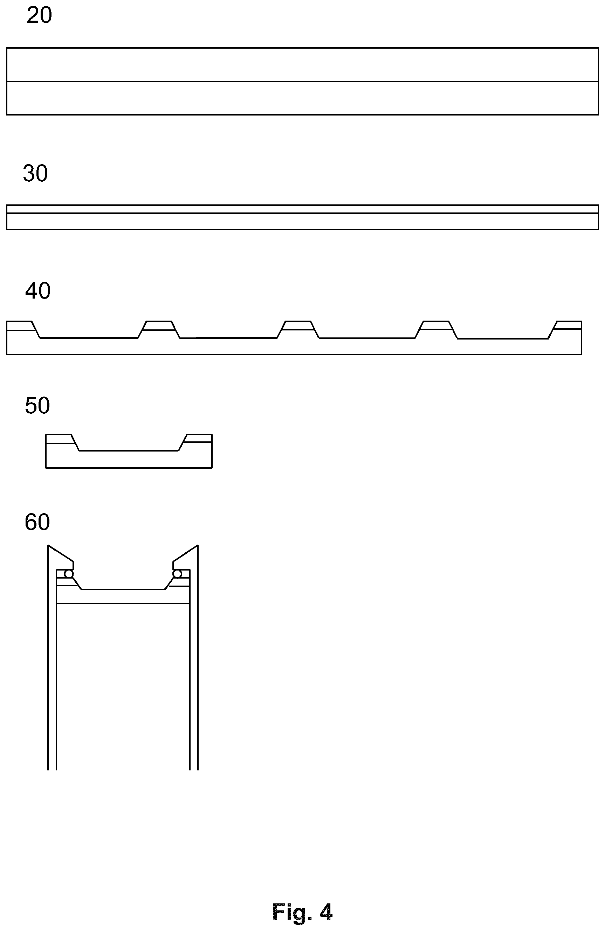

Die Figur 4 veranschaulicht beispielhaft die Schritte zur Herstellung und zum Einbau des Sensorelements 15 in den Sensorschaft 4 in der Ausführungsform eines elektrochemischen Sensors gemäss Figur 2 und für ein mittels Wafertechnologie mit dem Messelement 2 verbundenes Isolatorelement 10 aus chemisch und thermisch beständigem Isolatorglas. In Schritt 20 wird ein Wafer von circa 50 bis 100 mm Durchmesser aus elektrochemisch aktivem pH-Glas mit einer Dicke von 0,3 mm bis 1,2 mm, bevorzugt 0,6 mm mittels Direct Bonding oder Fusion Bonding mit einem gleich grossen Wafer aus chemisch und thermisch beständigem Isolatorglas mit angepasstem, insbesondere identischem, thermischen Ausdehnungskoeffizienten verbunden. Die genannten Methoden des sogenannten Waferbonding sind bekannt und werden daher nicht näher beschrieben.

Nach der Bildung eines derart monolithischen mindestens zweilagigen Wafers aus dem Messelement 2 und dem Isolatorelement 10 wird in Schritt 30 mittels Schleifen und anschliessendem Polieren die Dicke beider Lagen des Wafers reduziert auf etwa 0,1 mm für das Isolatorglas und etwa 0,1 bis 0,2 mm für das pH-Glas.

Anschliessend wird im Schritt 40 mittels nasschemischen Ätzens oder eines Trockenätzprozesses oder mechanischen Prozesses wie powder plasting oder fluid jet polishing und vermittels Masken das Isolatorglas strukturiert, wobei eine Freistellung des pH-Glases in definierten Bereichen erzeugt wird, so dass genau definierte Messflächen 8 für die jeweiligen Messelemente 2 auf dem mindestens zweilagigen Wafer entstehen. Gleichzeitig bleibt in den Randbereichen das Isolatorglas stehen, um nach der Vereinzelung der Sensorelemente 15 die Isolatorelemente 10 als deren Bestandteil zu bilden

In Schritt 50 erfolgt die Vereinzelung zu Sensorelementen 15 mit den zugehörigen Isolatorelementen. Sie werden bevorzugt geschnitten, zum Beispiel mittels Laser- oder Diamantschneidens, und gegebenenfalls in eine geeignete Form geschliffen. Das Schneiden erfolgt in den Bereichen vorhandenen Isolatormaterials und in eine für den Einbau in einen Sensorschaft 4 geeignete Form, z.B. kreisförmig für einen Sensor, wie er in der Figur 2 gezeigt ist oder rechteckig, wie in der Figur 3B zu sehen ist.

Ein Sensorelement 15 wird in Schritt 60, gegebenenfalls nach weiterem Bearbeiten beziehungsweise dem Hinzufügen weiterer Baugruppen, die zur Herstellung der Funktionsfähigkeit eines Sensors 1 notwendig sind, in einen Sensorschaft 4 eingebaut, so dass das Isolatorelement 10 mit dem im Falle des Gebrauchs in ein Messmedium 5 eingetauchten Sensor 1 dem Messmedium 5 zugewandt ist. Dabei wird ein Dichtungselement 9 zwischen eine Einfassung 11 und dem Isolatorelement 10 dichtend angeordnet, das heisst das Sensorelement 15 mit dem Messelement 2 und dem Isolatorelement 10 wird durch kontrolliertes Einpressen einer Haltevorrichtung 14 im Inneren (siehe Figur 3A) des Sensorschafts 4 fixiert.

Die Herstellung eines Sensors, welcher eine mittels physikalischer oder chemischer Abscheideverfahren erzeugte Schicht als Isolatorelement, beispielsweise eine Siliziumnitridschicht, aufweist, erfolgt in analoger Weise. Das Beschichtungsverfahren ist bevorzugt PECVD (plasma enhanced chemical vapor deposition). Der Ätzprozess zur Herstellung der Freistellung erfolgt durch Plasmaätzen.

Alternativ könnten auch die Bereiche der Freistellung bereits auf dem Wafer aus sensitivem Material mittels Masken abgedeckt werden und das Isolatormaterial - hier Siliziumnitrid - bereits beim Aufbringen, z.B. mittels PVD (physical vapor deposition), gleich strukturiert aufgedampft bzw. abgeschieden werden.

Die Erfindung wurde anhand von bevorzugten Ausführungsformen gezeigt und beschrieben. Es sollen jedoch auch andere, hier nicht ausführlich genannte Ausführungen und Weiterbildungen der Erfindung vom Schutzumfang umfasst sein. Beispielsweise ist es denkbar beim Strukturieren des Isolatormaterials des Wafers verschiedene Muster in der Freistellung, beispielsweise Inseln und dergleichen mehr zu erzeugen.

### Liste der Bezugszeichen

- 1, 101: Elektrochemischer Sensor
- 2, 102: Messelement
- 3: Sensorkopf
- 4, 104: Sensorschaft
- 5: Messmedium
- 6: Kontakt
- 7: Leitung
- 8, 108: Messfläche
- 9, 109: Dichtungselement
- 10, 110: Isolatorelement
- 11, 111: Einfassung
- 112: Abgeflachter Bereich des Sensorschafts 104
- 13, 113: Fenster
- 14: Haltevorrichtung
- 15, 115: Sensorelement
- 16: Referenzelektrode
- 17: Transmitter
- 20: Waferbonding
- 30: Anpassung der Waferdicke
- 40: Strukturierung
- 50: Vereinzelung
- 60: Einbau

## Patentansprüche

1. Elektrochemischer Sensor (1, 101) aufweisend
ein planes Messelement (2, 102) umfassendes Sensorelement (15, 115) mit einer im Gebrauch einem Messmedium (5) zugewandten Messfläche (8, 108),
einen Sensorschaft (4, 104),)
welcher an seinem im Gebrauch dem Messmedium (5) zugewandten Ende ein Fenster (13, 113) mit einer Einfassung (11, 111) aufweist
und in welchen Sensorschaft (4, 104) das Sensorelement (15, 115) im Bereich des Fensters (13, 113) eingebaut ist,
ein ringförmiges Dichtungselement (9, 109),
welches zwischen dem Sensorelement (15, 115) und der Einfassung (11, 111) angeordnet ist,
wobei das Sensorelement (15, 115) ein Isolatorelement (10, 110) aufweist, welches fest und untrennbar mit dem Messelement (2, 102) unter Freistellung der Messfläche (8, 108) verbunden ist
und wobei das Dichtungselement (9, 109) den elektrochemischen Sensor gegen das Eindringen von Messmedium (5) schützend zwischen dem Isolatorelement (10, 110) und der Einfassung (11, 111) dichtend angeordnet ist.

2. Elektrochemischer Sensor (1, 101) nach Anspruch 1, **dadurch gekennzeichnet, dass** das Messelement (2, 102) eine flache, ebene Scheibe aus elektrochemisch aktivem pH-Glas aufweist.

3. Elektrochemischer Sensor (1, 101) nach Anspruch 1, **dadurch gekennzeichnet, dass** das Messelement (2, 102) eine flache, ebene Schicht oder Schichtstruktur umfassend elektrochemisch aktives pH-Glas aufweist.

4. Elektrochemischer Sensor (1, 101) nach Anspruch 1, 2 oder 3, **dadurch gekennzeichnet, dass** das Isolatorelement (10, 110) ein thermisch und chemisch beständiges Isolatorglas aufweist, dessen thermischer Ausdehnungskoeffizient jenem des Messelements (2, 102) angepasst ist, insbesondere weitgehend identisch mit dem thermischen Ausdehnungskoeffizienten des Messelements ist.

5. Elektrochemischer Sensor (1, 101) nach Anspruch 1, 2 oder 3, **dadurch gekennzeichnet, dass** das Isolatorelement (10, 110) eine mittels physikalischer oder chemischer Abscheideverfahren aufgebrachte Isolatorschicht, insbesondere aus Siliziumnitrid aufweist.

6. Elektrochemischer Sensor (1, 101) nach einem der Ansprüche 1 bis 5, **dadurch gekennzeichnet, dass** der Sensorschaft (4, 104) zylindrisch ist und das Fenster (13, 113) an der Stirnfläche des Sensorschafts (4, 104) angeordnet ist.

7. Elektrochemischer Sensor (1, 101) nach einem der Ansprüche 1 bis 45, **dadurch gekennzeichnet, dass** der Sensorschaft (4, 104) zylindrisch ist und das Fenster (13, 113) in einem abgeflachten Bereich (112) des Zylindermantels des Sensorschafts (4, 104) angeordnet ist.

8. Elektrochemischer Sensor (1, 101) nach Anspruch 7, **dadurch gekennzeichnet, dass** die Messfläche (8, 108) des Messelements (2, 102) kreisförmig oder ellipsenförmig oder rechteckig ausgeformt ist.

9. Elektrochemischer Sensor (1, 101) nach einem der Ansprüche 1 bis 8, **dadurch gekennzeichnet, dass** der Sensorschaft (4, 104) aus thermisch und chemisch resistentem metallischen Material oder aus ist aus thermisch und chemisch resistentem Kunststoffmaterial gefertigt ist.

10. Elektrochemischer Sensor (1, 101) nach einem der Ansprüche 1 bis 9, **dadurch gekennzeichnet, dass** das Dichtungselement (9, 109) einen Ring aus elastischem Polymermaterial oder einem Elastomer aufweist.

11. Verfahren zur Herstellung eines elektrochemischen Sensors (1, 101) mit einem einer im Gebrauch einem Messmedium (5) zugewandten planen Messfläche (8, 108) aufweisend die folgenden Schritte:
• Herstellen einer untrennbaren Verbindung eines Wafers aufweisend sensitives Material mit Isolatormaterial zu einem mindestens zweilagigen Wafer (20)
• Erzeugen einer vordefinierten Dicke durch Bearbeiten des sensitiven Materials und gegebenenfalls des damit verbundenen Isolatormaterials (30)
• Strukturieren des Isolatormaterials unter Freistellung oder Aussparung einer Messfläche (8, 108) im sensitiven Material zur Bildung eines Messelements (2, 102) (40)
• Schneiden des mindestens zweilagigen Wafers aus verbundenem sensitiven Material und strukturiertem Isolatormaterial zu mit Isolatorelementen (10, 110) versehenen Sensorelementen (15, 115) in den Bereichen vorhandenen Isolatormaterials (50)
• Einbau eines derart erzeugten Sensorelements (15, 115) in einen Sensorschaft (4, 104), wobei ein Dichtungselement (9, 109) zwischen dem Isolatorelement (10, 110) und einer Einfassung (11, 111) am im Gebrauch dem Messmedium (5) zugewandten Ende des Sensorschafts (4, 104) dichtend eingebracht wird (60).

12. Verfahren nach Anspruch 11, wobei das sensitive Material ein elektrochemisch aktives pH-Glas aufweist und das Isolatormaterial ein thermisch und chemisch beständiges Isolatorglas mit einem zum sensitiven Material angepassten, insbesondere identischen, thermischen Ausdehnungskoeffizienten aufweist, welches Isolatormaterial vermittels "Direct Bonding" oder "Fusion Bonding" untrennbar zu einem mindestens zweilagigen Wafer mit dem sensitiven Material verbunden wird.

13. Verfahren nach Anspruch 11, wobei das Isolatormaterial eine Isolatorschicht, insbesondere aus Siliziumnitrid, umfasst, welche mittels physikalischer oder chemischer Abscheideverfahren auf das sensitive Material aufgebracht mit diesem zu einem mindestens zweilagigen Wafer verbunden wird.

14. Verfahren nach Anspruch 13, wobei die mittels physikalischer oder chemischer Abscheideverfahren aufgebrachte Isolatorschicht vermittels einer Maske direkt während des Abscheidens in Form von Isolatorelementen strukturiert erzeugt wird.

15. Verfahren nach einem der Ansprüche 11 bis 13, wobei das Isolatormaterial auf dem sensitiven Material vermittels Ätztechnik, insbesondere nasschemisch mit Flusssäure oder vermittels Plasmaätzen strukturiert wird.
